Europäisches Patentamt

European Patent Office

Office européen des brevets

(19)

(11) **EP 0 401 044 B1**

(12)

# EUROPEAN PATENT SPECIFICATION

(45) Date of publication and mention
of the grant of the patent:
**01.09.1999 Bulletin 1999/35**

(51) Int Cl.[6]: **C08J 3/24**, C08J 3/12
// C08L101:02

(21) Application number: **90306019.2**

(22) Date of filing: **01.06.1990**

(54) **Process for the production of absorbent polymers**

Verfahren zur Herstellung absorbierender Polymere

Procédé pour la préparation de polymères absorbants

(84) Designated Contracting States:
**DE DK ES FR GB IT NL SE**

(30) Priority: **01.06.1989 GB 8912600**

(43) Date of publication of application:
**05.12.1990 Bulletin 1990/49**

(73) Proprietor: **Ciba Specialty Chemicals Water
Treatments Limited
Bradford, West Yorkshire BD12 0JZ (GB)**

(72) Inventor: **Johnson, Ian Michael
Brighouse, West Yorkshire (GB)**

(74) Representative:
**Lawrence, Peter Robin Broughton et al
GILL JENNINGS & EVERY,
Broadgate House,
7 Eldon Street
London EC2M 7LH (GB)**

(56) References cited:
**EP-A- 195 406          EP-A- 0 277 017
GB-A- 2 126 591**

## Description

Absorbent polymers are widely made in the form of water insoluble, water swellable, particulate polymeric material derived by polymerisation of water soluble polymerisable material in the presence of a cross linking agent. The cross linking agent is usually a polyethylenically unsaturated monomer, which thus causes cross linking in the backbone of the polymer. However it is known also to cross link through pendant groups, for instance by reaction of pendant carboxylic groups with an aluminium or other polyvalent metal compound.

The particulate material is generally made by reverse phase bead polymerisation followed by drying and separation of the beads, or by bulk gel polymerisation followed by drying and comminution. These processes generally provide a product having a spread of particle sizes and in particular a product containing a fraction of particle size that is smaller than is desirable having regard to, for instance, flowability and the risk of environmental problems due to dusting. Generally this fraction of "fines" is separated from the particulate material. Its upper particles size will be selected according to the processing conditions. It may be as high as 150 or 200µm or as low as 50µm or even lower.

The separated fines cannot usually be used as such and so they are usually either dumped or put back into a wet stage in the process so that their polymeric material forms a part of the final dried particulate material. Unfortunately the recycling of fines in this manner tends to reduce the gel strength of the final particulate material.

Important properties for such material include gel strength, gel capacity, and rate of water absorption. Increasing degrees of cross linking tend to increase the gel strength but decrease the gel capacity and so the cross linking has to be optimised to obtain the optimum combination of gel strength and gel capacity. It is therefore very undesirable to cause an unwanted reduction in gel strength.

It is known that the rate of water absorption can be increased by reacting the surfaces of the particles with a cross linking agent, so as to form a relatively highly cross linked surface layer. Typically the cross linking agent is a polyvalent metal compound that reacts with carboxylic groups in the polymer molecules close to the surface of the particles.

In EP 195406 the preformed polymer is reacted in the presence of water with a silane coupling agent. It is stated that this can be performed by adding a mixture of water and the silane coupling agent to the water absorbing polymer in the dried state and heating the resulting mixture to evaporate water. It appears that, in all the relevant examples, the reaction was conducted while the polymer was dispersed in a non-aqueous liquid with the result that the polymer substantially maintains its initial particulate state throughout the reaction with silane.

Although this process may be a useful way of improving the rate of water absorption, and possibly also the gel strength, of preformed particles of a satisfactory size, it is of no assistance in the problem of dealing with particles that are too small.

According to the invention, water insoluble, water swellable, particulate polymeric material is made from dry polymer particles which have a size of at least 30% by weight below 200µm and which are formed from water soluble ethylenically unsaturated material comprising polyethylenically unsaturated cross-linking agent and are swellable, water insoluble, particles by a process comprising

forming a gel mass by a process comprising absorbing an aqueous solution of a cross-linking agent into the said dry particles,

causing cross linking of the polymer in the gel mass by reaction between the cross-linking agent and pendant groups in the polymer, and thereby causing the particles to permanently lose their particulate form within that mass, and

drying and comminuting the gel mass to particles wherein the amount by weight below 200µm is below half the amount by weight of the starting particles which are below 200µm.

Thus in the invention we form dry particles (the starting particles) of water swellable polymer typically having a gel capacity of at least 20g deionised water per gram polymer and then convert them back into a gel mass in which they become cross linked, and the mass is then recomminuted and redried. This is entirely different from processes of surface cross linking, such as EP 195406, since in such processes the particles that are treated with the cross linking agent do broadly retain their original configuration throughout the process. In the invention however the fines become an integral part of the gel mass and thus permanently lose their particulate form within that mass.

The dry particles that are used to form the gel mass preferably have a substantial proportion of fine particles in them. Generally at least 50% are fines, for instance below 200µm and usually below 150µm, preferably below 100µm. Particles below 50µm can cause particularly serious dusting problems and so the invention is of particular value when applied to a fraction having at least 50%, and sometimes at least 90% by weight below 50µm.

The starting particles can be a fraction sieved from a product, in which event at least 90% of the particles will generally be below 200 and usually below 150µm, usually below 100µm.

The invention is, however, also of value for upgrading the quality of a particulate product that does contain particles of a satisfactory size above 200µm but also contains an unacceptably large proportion of fines. Thus the dry particulate product that is formed into the gel mass is a product which is 0 to 70% by weight, often 0 to 50% by weight, above and 30 to 100%, often 50 to 100% by weight below a particle size of 200μm or 150μm, most preferably 100μm.

The dry particles may have been made by reverse phase bead polymerisation, generally followed by sieving to produce a fines fraction for use in the invention, but more usually is made by a process comprising drying and comminution of larger particles. These larger particles may have been made by reverse phase bead polymerisation but, more usually, are made by comminution of gel made by bulk gel polymerisation.

The polymer in these particles is a polymer formed from water soluble ethylenically unsaturated material comprising polyethylenically unsaturated cross linking agent with the result that the polymer is cross linked in the backbone of the polymer. The water soluble ethylenically unsaturated material may be a single water soluble ethylenically unsaturated monomer or may be a water soluble blend of ethylenically unsaturated monomers.

The ethylenically unsaturated material can be non-ionic, anionic or cationic. If it is ionic, it can be a blend of non-ionic and ionic monomers, the amount of non-ionic monomer often being 0 to 90%, and usually 0 to 70%, by weight of the blend.

The preferred ethylenically unsaturated material is generally anionic and may be formed from anionic monomer alone or a blend of anionic and non-ionic monomers. Although sulphonic monomers (e.g., allyl sulphonate or 2-acrylamido-2-methyl propane sulphonate) can form part of the anionic monomer, it is generally preferred that the ethylenically unsaturated material should comprise carboxylic monomer, for instance methacrylic acid, maleic acid, itaconic acid, crotonic acid or, preferably, acrylic acid.

Suitable non-ionic monomers include vinyl pyrollidone, methacrylamide or, preferably, acrylamide.

Suitable cationic monomers include dialkylaminoalkyl (meth) -acrylamides and -acrylates, usually as acid addition or quaternary salts. Examples are dimethylaminoethyl (meth) acrylates and dimethylaminopropyl (meth) acrylamides.

Preferred polymers are formed from 10 to 100%, often 30 to 100%, acrylic acid with the balance being acrylamide. The acrylic acid can be entirely in the form of free acid but, provided this does not interfere with the cross linking reaction, at least 50% and usually at least 75% of the acid groups are present in the form of sodium or other alkali metal or other water soluble salt.

The dry particles will often have conventional dryness as a result of drying followed by exposure to the ambient atmosphere, for instance below 15% moisture, and so the process can be applied to the treatment of previously made product. However the process of the invention can also be conducted as part of the overall production process starting with polymerisation of the monomer or monomer blend and then the dry particles do not have to be dried fully before they are rewetted and can, instead, still be slightly moist, for instance having a moisture content up to 20 or 25%. They must however be sufficiently dry that they behave primarily as fully dried particles rather than as sticky particles.

The particles are then mixed with sufficient of an aqueous solution of a cross linking agent to form a gel mass. Depending upon the degree of cross linking in the initial particles the total amount of water at this stage will usually be at least 20% (by weight based on the weight of particles and added aqueous solution). Although 20% may be adequate if the polymer particles were linear the amount is usually at least 30% by weight, especially when the starting polymer is cross linked. It is undesirable to add too much water at this stage since it has to be removed subsequently and so generally the total amount of water at this stage is preferably below 70%, most preferably below 60%. Water content of around 50% is generally preferred.

In addition to converting the individual particles back to a gel mass, the aqueous solution must also carry the cross linking agent into the gel mass. This cross linking agent may penetrate uniformly throughout the particles or may be concentrated primarily at what were, originally, the interfaces of adjacent particles.

Thus a product obtainable by a process according to the invention is a water insoluble, water swellable, particulate polymeric material formed from ethylenically unsaturated material wherein the polymeric material has a polymer structure that is formed of zones in which the polymer is substantially free of cross links between pendant groups in the polymer and the zones are interconnected by cross linking through pendant groups in the polymer. Each zone generally corresponds to one of the initial dry particles in which the polymer structure is either linear, if the starting particles were linear, or more usually is cross linked in the backbone by a polyethylenically unsaturated monomer.

The cross linking agent is one that will react with pendant groups in the polymer before or during the final drying so as to cause cross linking. Preferably the cross linking agent reacts with carboxylic groups in the polymer and so preferably the polymer is anionic. However it is possible to cross link through other pendant groups, and such groups can be included primarily for the purpose of providing a cross linking function in the polymer. The cross linking agent must be selected such that it is capable of reacting with the chosen groups.

The use of a polyvalent metal compound, such as a compound of aluminium can be suitable when the groups are carboxylic and the polymer is linear, and will lead to ionic cross linking. However this cross linking is usually inadequate when the polymer is swellable (and cross linked) rather than soluble because it may not resist adequately the swelling forces that exist within the final particles when they swell.

Preferably therefore the compound is one that leads to covalent cross linking, in which event the cross linking agent should be a compound that has at least two functionalities capable of reacting with carboxylic or other pendant groups. Suitable functionalities include hydroxy and epoxide groups and thus suitable compounds include glycidyl ethers and polyepoxy compounds such as ethylene (or polyethylene) glycol diglycidyl ether, glycerol (or diglycerol or polyglycerol) polyglycidyl ether and sorbitol polyglycidyl ether and polyhydroxy compounds such as ethylene glycol, glycerol and trimethylol propane.

A preferred cross linking agent is a silane coupling agent, and the materials described in detail in EP 195406 are suitable. Such materials can have the formula

$$X(R)_m Si(Y)_{3-m} \qquad (1)$$

wherein X represents a group having a functional group capable of reacting with the carboxyl group and/or the carboxylate group of the water-absorbing polymer, R represents a hydrocarbon group, Y represents a hydrolyzable group, and m is 0, 1 or 2.

In formula (1), X is a group having a functional group capable of reacting with the carboxyl group and/or the carboxylate group of the water-absorbing polymer. Examples include an epoxy group, an amino group, a mercapto group, a chlorine atom and a carbon of a quaternary amine.

Y is a hydrolyzable group such as a lower alkoxy group or a lower acyloxy group. Preferably, these groups have 1 to 4 carbon atoms. It is believed that the hydrolyzable group undergoes hydrolysis to form a silanol group which is dehydrocondensed in a well known manner to form an Si-O-Si bond.

R is a hydrocarbon group, for example, an alkyl or aryl group, preferably an alkyl group having 1 to 4 carbon atoms or a phenyl group.

m is 0, 1 or 2. In other words, the silane coupling agent of formula (1) should have the hydrolyzable group (Y) as an essential group, but does not always have to contain the hydrocarbon group (R).

Examples of the silane coupling agents of formula (1) are gamma-glycidoxypropyltrimethoxysilane, gamma-glycidoxypropylmethyldiethoxysilane, beta-(3,4-epoxycyclohexyl)ethyltrimethoxysilane, gamma-(2-aminoethyl)-aminopropyltrimethoxysilane, gamma-(2-aminoethyl)-aminopropylmethyldimethoxysilane, gamma-aminopropyltriethoxysilane, N-phenylgamma-aminopropyltrimethoxysilane, gamma-mercaptopropyltrimethoxysilane, gamma-mercaptopropylmethyldimethoxysilane, gamma-chloropropyltrimethoxysilane, gamma-chloropropylmethyldimethoxysilane and octadecyldimethyl[3-(trimethoxysilyl)propyl]ammonium chloride. Of these, silane coupling agents having a glycidyl group as the functional group X, such as gamma-glycidoxypropyltrimethoxysilane, are preferred.

The concentration of cross linking agent in the aqueous solution is selected having regard to the level of cross linking that is required and the amount of solution that is being absorbed into the particles. Generally the dry weight of cross linking agent is within the range 0.05 to 5%, most usually 0.1 to 1%, dry weight based on the dry weight of polymer.

The cross linking reaction may occur relatively spontaneously upon absorption of the aqueous solution into the dry particles or, depending upon the choice of cross linking agent, it may be necessary to maintain the gel mass at ambient or elevated temperature for a suitable period to allow cross linking to occur or it may be necessary to heat the gel mass. Often any heating that is required can be provided during the drying and so a convenient process comprises absorbing the aqueous solution into the dry particles to form a gel mass and substantially immediately drying the mass by heating and comminuting the mass. In order to ensure uniform distribution of the aqueous solution, it is generally necessary to stir the particles and gel mass, for instance by a screw mixer, during the absorption. The mass may be comminuted into large pieces prior to or during the drying in conventional manner and is generally comminuted to the desired final particle size prior to final drying on, for instance, a fluidised bed in conventional manner.

The final particle size can be selected by appropriate choice of drying and comminution conditions in conventional manner and is usually below 2mm, preferably below 1mm. At least 90% of the particles are preferably above 200μm and if any significant proportion of fines are produced it can be convenient to sieve these out and recycle them again. The average particle size of the final particles is usually at least twice the average particle size of the initial particles. The amount of particles below 200μm in the final product is usually below half, and often below quarter, of the amount in the initial dry particles.

The resultant particles may be used by themselves or they may be used blended with particles that have not been subjected to the process. For instance a conventional process for making absorbent polymer particles may be modified by separating the fines from that process, treating the fines in accordance with the invention and then recombining the resultant treated particles with the main production.

In another process, the aqueous solution of cross linking agent is absorbed into the dry particles and subsequently or simultaneously the gel mass is formed by blending the product of this absorption with the main production of water absorbent polymer, i.e., the product of the gel polymerisation.

Typical amounts of cross linked fines that may be incorporated back into the gel or mixed with dried product are in the range 5 to 50%, often 5 to 20%, based on the total weight of polymer.

The final product, either consisting solely of the treated fines or these blended with other absorbent polymer, can be used in any situation where absorbent polymer is conventionally used but is of particular value for absorbing water from particulate masses for instance as in EP 195550 or GB 2,200,133. The final product has improved gel strength whilst retaining satisfactory gel capacity.

The following are examples.

Example 1

100kg of water containing 0.5Kg of 3-glycidyloxpropyl-trimethoxysilene (glymo) are mixed in a scroll mixer with 100kg of a dry cross linked sodium polyacrylate powder with a particle size less than 100 microns sieved from a conventional product made by gel polymerisation and drying and comminution. Both components are added continuously at such a rate as to produce a reconstituted gel at 50% solids. The resultant gel is cut into small pieces prior to drying in a fluid bed drier at 100°C. The coarse dry powder is ground and the product between 850 and 900µm retained.

The process is prepared using the same techniques, but omitting the glymo; for use as a control.

On swelling in water or saline solution the product made using the glymo is able to maintain a firm structure in the swollen state. The control polymer reverts back to swollen fines which are quite soft.

Example 2

The gel strength at different levels of torque is measured on various products. Product A is made by adding an aqueous liquor to a dry particulate material from which the fines used in Example 1 have been obtained by sieving.

In product B, the gel mass is obtained from the same particulate material as in product A except that 10% of the fines described in Example 1 (without treatment with glymo) are recycled to the gel in conventional manner.

Product C is the same as product B except that the fines are treated with glymo in accordance with Example 1 before the recycling.

The gel strength of product C is considerably greater, especially at high torque values, than the gel strength of product A which, in turn, is greater than the gel strength of product B.

Example 3

50 grams of cross linked sodium polyacrylate fines are added into a food processor and mixed at slow speed. Sufficient aqueous solution is added to cause the fines to agglomerate into a gel and the speed is then increased to break down any large agglomerates. The product is dried in an oven at 80°C and sieved between 850µm and 45µm. The resultant particles are then tested for their capacity and rate of absorption of 0.9% aqueous sodium chloride. The amount of cross linking agent that is provided by the solution ranged from 0.5% to 1.5%, and the cross linking agent was ethylene glycol diglycidyl ether. The drying temperatures range from 80 to 110°C. The absorption capacities were all very satisfactory. The rate of uptake is greatest using 1.5% of the cross linking agent. The optimum amount of glycidyl ether or other cross linking agent will therefore be selected having regard to the particular balance of absoption properties that are required and in some instances, especially when using materials such as glycidyl ethers, optimum amounts range up to 3%, 5% or even up to 10%.

**Claims**

1. A process of making water insoluble, water swellable, particulate polymeric material from starting dry polymer particles which have a size at least 30% by weight below 200µm and which are formed from water soluble ethylenically unsaturated material comprising polyethylenically unsaturated cross-linking agent and are swellable, water insoluble, particles and which comprises forming a gel mass by absorbing aqueous solution of cross-linking agent into the said dry particles, causing cross-linking of the polymer in the gel mass by reaction between the cross-linking agent and pendant groups in the polymer, and thereby causing the particles to permanently lose their particulate form within that mass , and drying and comminuting the gel mass to particles wherein the amount by weight below 200µm is below half the amount by weight of the starting dry particles which are below 200µm.

2. A process according to claim 1 in which the particles made in the process have a size at least 90% by weight above 200µm.

3. A process according to claim 1 or claim 2 in which the starting dry particles have a moisture content of up to 20% and the amount of water introduced by the aqueous solution is from 30 to 70% by weight based on the weight of particles and added aqueous solution.

4. A process according to any preceding claim in which the starting polymer particles are anionic, water swellable, water insoluble particles.

5. A process according to any preceding claim in which the starting polymer particles are formed from 30 to 100% acrylic acid or water soluble salt thereof with 0 to 70% acrylamide.

6. A process according to any preceding claim in which the cross-linking agent in the aqueous solution is a covalent cross-linking agent that will react covalently with pendant groups in the polymer.

7. A process according to any preceding claim in which the polymer is anionic and contains carboxylic groups and the cross-linking agent is selected from silane coupling agents and materials providing at least two groups selected from hydroxyl and epoxide groups.

8. A process according to any preceding claim in which the polymer is an anionic polymer containing carboxyl groups and the cross-linking agent in the aqueous solution is selected from silane coupling agents and glycidyl ethers.

9. A process according to any preceding claim comprising absorbing the said aqueous solution into the starting dry particles and subsequently or simultaneously blending the product of this absorption with cross-linked polymer gel made by gel polymerisation.

10. A process according to any preceding claim in which the starting dry particles are provided by sieving fines from a product made by reverse phase bead polymerisation or from a product made by drying and comminuting gel particles made either by reverse phase bead polymerisation or by comminution of gel made by bulk gel polymerisation.

11. A process according to any preceding claim in which the starting dry particles have a size at least 50% below 150 µm.

12. A process according to any preceding claim in which at least 90% by weight of the fines have a particle size below 100µm.

**Patentansprüche**

1. Verfahren zur Herstellung von wasserunlöslichem, in Wasser quellbarem teilchenförmigem polymerem Material aus trockenen Polymer-Ausgangsteilchen, die eine Größe von mindestens 30 Gew.-% unter 200 µm aufweisen und aus wasserlöslichem ethylenisch ungesättigtem Material, das polyethylenisch ungesättigtes Vernetzungsmittel umfaßt, gebildet sind und quellbare, wasserunlösliche Teilchen sind, und welches umfaßt das Bilden einer Gelmasse durch Absorption einer wässrigen Lösung von Vernetzungsmittel in den trockenen Teilchen, das Veranlassen einer Vernetzung des Polymers in der Gelmasse durch Reaktion zwischen dem Vernetzungsmittel und seitenständigen Gruppen in dem Polymer, und dadurch das Bewirken des dauerhaften Verlusts der teilchenförmigen Form der Teilchen in dieser Masse, und das Trocknen und Zerkleinern der Gelmasse zu Teilchen, worin die Gewichtsmenge unter 200 µm weniger als die Hälfte der Gewichtsmenge der trockenen Ausgangsteilchen, die kleiner als 200 µm sind, beträgt.

2. Verfahren nach Anspruch 1, worin die in dem Verfahren hergestellten Teilchen eine Größe von mindestens 90 Gew.-% über 200 µm aufweisen.

3. Verfahren nach Anspruch 1 oder Anspruch 2, worin die trockenen Ausgangsteilchen einen Feuchtigkeitsgehalt von bis zu 20% aufweisen und die durch die wässrige Lösung eingeführte Wassermenge 30 bis 70 Gew.-% bezogen auf das Gewicht von Teilchen und zugegebener wässriger Lösung beträgt.

4. Verfahren nach irgendeinem vorhergehenden Anspruch, worin die Ausgangs-Polymerteilchen anionische, in Wasser quellbare, wasserunlösliche Teilchen sind.

5. Verfahren nach irgendeinem vorhergehenden Anspruch, worin die Ausgangs-Polymerteilchen aus 30 bis 100% Acrylsäure oder deren wasserlöslichem Salz mit 0 bis 70% Acrylamid gebildet sind.

6. Verfahren nach irgendeinem vorhergehenden Anspruch, worin das Vernetzungsmittel in der wässrigen Lösung ein kovalentes Vernetzungsmittel ist, das kovalent mit seitenständigen Gruppen in dem Polymer reagiert.

7. Verfahren nach irgendeinem vorhergehenden Anspruch, worin das Polymer anionisch ist und Carboxylgruppen enthält, und das Vernetzungsmittel ausgewählt ist aus Silan-Kupplungsmitteln und Materialien, die mindestens zwei aus Hydroxyl- und Epoxidgruppen ausgewählte Gruppen bereitstellen.

8. Verfahren nach irgendeinem vorhergehenden Anspruch, worin das Polymer ein Carboxylgruppen enthaltendes anionisches Polymer ist und das Vernetzungsmittel in der wässrigen Lösung ausgewählt ist aus Silan-Kupplungsmitteln und Glycidylethern.

9. Verfahren nach irgendeinem vorhergehenden Anspruch, umfassend die Absorption der wässrigen Lösung in den trockenen Ausgangsteilchen und das nachfolgende oder gleichzeitige Mischen des Produkts dieser Absorption mit durch Gelpolymerisation hergestelltem vernetztem Polymergel.

10. Verfahren nach irgendeinem vorhergehenden Anspruch, worin die trockenen Ausgangsteilchen bereitgestellt werden durch Sieben von Feinstgut aus einem durch Umkehr-Perlpolymerisation hergestellten Produkt oder aus einem Produkt, das durch Trocknen und Zerkleinern von Gelteilchen hergestellt wurde, welche entweder durch Umkehrphasen-Perlpolymerisation oder durch Zerkleinern von durch Gel-Massepolymerisation hergestelltem Gel hergestellt wurden.

11. Verfahren nach irgendeinem vorhergehenden Anspruch, worin die trockenen Ausgangsteilchen eine Größe von mindestens 50% unter 150 µm aufweisen.

12. Verfahren nach irgendeinem vorhergehenden Anspruch, worin mindestens 90 Gew.-% des Feinstgutes eine Teilchengröße unter 100 µm aufweisen.

**Revendications**

1. Procédé de fabrication d'une matière polymère en particules, insoluble dans l'eau, capable de gonfler dans l'eau, à partir de particules sèches de polymère de départ ayant une dimension telle que 30 % au moins en masse soient inférieures à 200 µm et formées à partir d'une matière à insaturation éthylénique soluble dans l'eau comprenant un agent de réticulation à plusieurs insaturations éthyléniques, ces particules étant capables de gonfler, insolubles dans l'eau, comprenant la formation d'une masse gélifiée par l'absorption d'une solution aqueuse de l'agent de réticulation par lesdites particules sèches, la création d'une réticulation du polymère dans la masse gélifiée par réaction entre l'agent de réticulation et les groupes pendants dans le polymère et, par ce moyen, la perte définitive de la forme particulaire des particules dans cette masse et le séchage et la fragmentation de la masse gélifiée en particules, la quantité en masse des particules inférieures à 200 µm étant inférieure à la moitié de la quantité en masse des particules sèches de départ inférieures à 200 µm.

2. Procédé selon la revendication 1, dans lequel les particules fabriquées dans le procédé ont une dimension telle que 90 % au moins en masse sont supérieures à 200 µm.

3. Procédé selon la revendication 1 ou la revendication 2, dans lequel les particules sèches de départ ont un taux d'humidité jusqu'à 20 % et la quantité d'eau introduite par la solution aqueuse est de 30 à 70 % en masse par rapport à la masse des particules et de la solution aqueuse ajoutée.

4. Procédé selon une quelconque des revendications précédentes, dans lequel les particules de polymère de départ sont des particules anioniques insolubles dans l'eau, capables de gonfler dans l'eau.

5. Procédé selon une quelconque des revendications précédentes, dans lequel les particules de polymère de départ sont formées à partir de 30 à 100 % d'acide acrylique ou d'un de ses sels solubles dans l'eau avec 0 à 70 % d'acrylamide.

6. Procédé selon une quelconque des revendications précédentes, dans lequel l'agent de réticulation dans la solution aqueuse est un agent de réticulation covalent qui réagira de façon covalente avec les groupes pendants dans le polymère.

7. Procédé selon une quelconque des revendications précédentes, dans lequel le polymère est anionique et contient des groupes carboxyliques et l'agent de réticulation est choisi parmi les agents de couplage à base de silane et des matières fournissant au moins deux groupes choisis parmi les groupes hydroxyle et époxyde.

8. Procédé selon une quelconque des revendications précédentes, dans lequel le polymère est un polymère anionique contenant des groupes carboxyle et l'agent de réticulation dans la solution aqueuse est choisi parmi les agents de couplage à base de silane et les éthers glycidyliques.

9. Procédé selon une quelconque des revendications précédentes comprenant l'absorption de ladite solution aqueuse par les particules sèches de départ et, ensuite ou simultanément, le mélange du produit de cette absorption avec un gel de polymère réticulé obtenu par polymérisation en gel.

10. Procédé selon une quelconque des revendications précédentes, dans lequel les particules sèches de départ sont fournies par des fines obtenues par tamisage à partir d'un produit fabriqué par polymérisation en perle en phase inverse ou à partir d'un produit fabriqué par séchage et fragmentation de particules de gel fabriquées soit par polymérisation en perle en phase inverse, soit par fragmentation d'un gel obtenu par polymérisation en gel en masse.

11. Procédé selon une quelconque des revendications précédentes, dans lequel au moins 50 % des particules sèches de départ ont une dimension inférieure à 150 µm.

12. Procédé selon une quelconque des revendications précédentes, dans lequel au moins 90 % des fines de départ ont une dimension de particules inférieure à 100 µm.